# EUROPÄISCHE PATENTANMELDUNG

(11) **EP 2 172 692 A2**
(43) Veröffentlichungstag der Anmeldung: **07.04.2010**
(21) Anmeldenummer: 09450180.6
(22) Anmeldetag: 24.09.2009
(51) Int. Cl.: F21S 8/00, H01L 33/54, F21S 4/00, F21V 29/00, F21V 5/04, F21S 8/04, F21Y 101/02, F21Y 103/00, F21V 3/02

(54) **Leuchte**

(30) Priorität: 26.09.2008 AT 15072008
(71) Anmelder: Rosenitsch, Harald, 1130 Wien (AT)
(72) Erfinder: Rosenitsch, Harald, 1130 Wien (AT)
(74) Vertreter: Rippel, Andreas

(57) **Zusammenfassung**

Bei einer Leuchte, die mit LED,s als Lichtquellen bestückt ist, sind die LED,s (2) im Abstand voneinander auf mindestens einer länglichen Leiterplatte (1) angeordnet. Die Leiterplatte(n) (1) mit den LED,s (2) wird von einer im unteren Bereich im Querschnitt tropfenartig geformten länglichen Linse (6) überdeckt.

Dadurch wird eine besonders wirkungsvolle Beleuchtung möglich.

## Beschreibung

Die Erfindung bezieht sich auf eine Leuchte, die mit LED,s als Lichtquellen bestückt ist.

Derartige Leuchten werden zunehmend als Ersatz für Leuchten mit Glühlampen oder Leuchtstoffröhren als Lichtquellen eingesetzt. So sind z.B. Flugfeuer oder Gefahrenfeuer in Verwendung.

Die Vorteile solcher Leuchten mit LED,s als Lichtquellen sind insbesondere die sehr hohe Leuchtkraft bei geringem Strohverbrauch und die hohe Lebensdauer.

Die Erfindung hat es sich zum Ziel gesetzt, eine Leuchte, die mit LED,s als Lichtquellen bestückt ist, zu schaffen, welche in Tunnels, Hallen oder dergleichen eingesetzt werden kann.

Erreicht wird dies dadurch, dass die LED,s im Abstand voneinander auf mindestens einer länglichen Leiterplatte angeordnet sind, und die Leiterplatte(n) mit den LED,s von einer im unteren Bereich im Querschnitt tropfenartig geformten länglichen Linse überdeckt wird.

Eine erfindungsgemäße Leuchte ist äußerst einfach aufgebaut und es ist möglich, durch die Formgebung der Linse den beleuchteten Bereich zu bestimmen.

Bei einer besonders einfachen Ausführungsform der Erfindung besteht die Linse aus Kunststoff.

Zur Befestigung der Leiterplatten mit den LED,s ist es vorteilhaft den kurzen Schenkel eines T-förmigen Tragprofiles zu verwenden.

Der kurze Schenkel dieses T-förmigen Tragprofiles kann in eine Nut der länglichen Linse eingeschoben sein, sodaß eine sichere und einfach durchzuführende Befestigung der Linse ermöglicht wird.

Um eine gute Kühlung zu erreichen, wird erfindungsgemäß vorgeschlagen, dass die Linse 6 wenigstens teilweise von einer mit Kühlflüssigkeit zu füllenden Kammer 9 umschlossen ist.

Nachstehend ist die Erfindung anhand eines in der Zeichnung dargestellten Ausführungsbeispieles näher beschrieben, ohne auf dieses Beispiel beschränkt zu sein. Dabei zeigen:
- Fig. 1: die Seitenansicht eines Endes einer erfindungsgemäßen Leuchte;
- Fig. 2: einen Schnitt nach der Linie A-A in Fig. 1;
- Fig. 3: die Draufsicht auf eine erfindungsgemäße Leuchte;
- Fig. 4: einen Schnitt nach der Linie B-B in Fig. 3.

Gemäß den Zeichnungen ist eine längliche Leiterplatte 1 mit LED,s 2 bestückt. Es können auch mehrere Leiterplatten 1 hintereinander angeordnet sein.

Die Leiterplatte 1 ist auf dem kurzen Schenkel 3 eines T-förmigen Tragprofiles 4 befestigt. Öffnungen 5 ermöglichen die Befestigung des Tragprofiles 4 z.B. an einer Tunneldecke.

Die Leiterplatte 1 mit den LED,s 2 wird von einer länglichen Linse 6 überdeckt, die im unteren Bereich im Querschnitt tropfenartig geformt ist. Diese Linse 6 besteht zweckmäßig aus Kunststoff, insbesondere aus Plexiglas. In der Linse 6 ist eine Nut 7 ausgebildet, in welche der kurze Schenkel 3 mit der Leiterplatte 1 und den LED,s 2 eingeschoben ist. Die Stromzuführung zur Leiterplatte 1 bzw. den LED,s 2 erfolgt über einen Anschlußstecker 8.

Es ist ersichtlich, dass durch die Form der länglichen Linse 6 die Richtung der austretenden Lichtstrahlen bestimmt werden kann. Wird eine erfindungsgemäße Leuchte z.B. in einem Tunnel angeordnet, so kann die Form der Linse 6 so gewählt werden, dass auch seitliche Gehwege entsprechend beleuchtet werden.

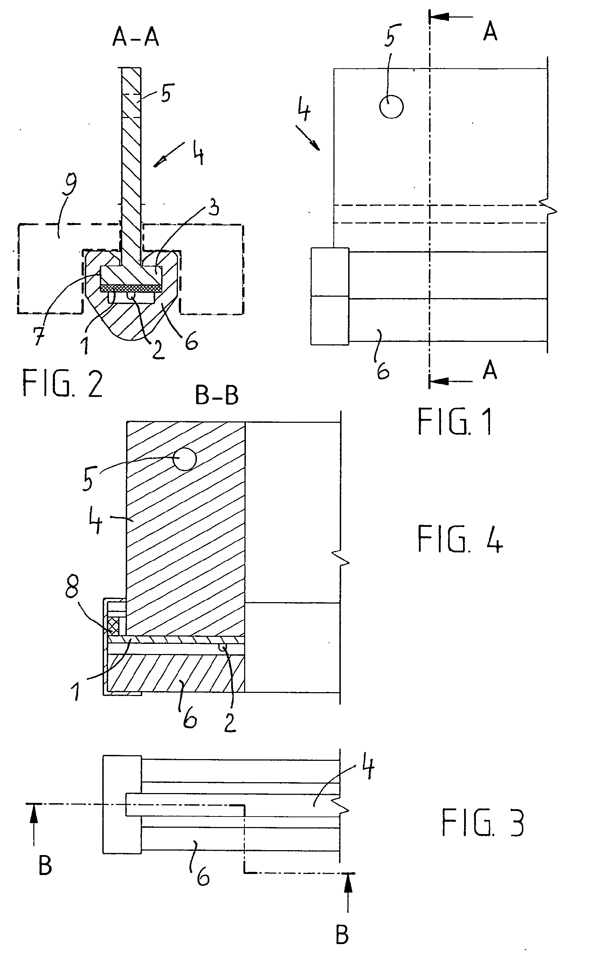

In Fig. 2 ist mit strichlierten Linien eine Kammer 9 angedeutet, welche mit Kühlflüssigkeit, z.B. Wasser, gefüllt werden kann, um eine gute Kühlung zu erreichen. Die Kammer 9 kann auch mit Kühlrippen (nicht dargestellt) versehen werden.

Im Rahmen der Erfindung sind zahlreiche Abänderungen möglich. So kann die Befestigung der Linse an Tragorganen anders als dargestellt durchgeführt werden, z.B. wäre eine Verschraubung an den Tragorganen möglich.

## Patentansprüche

1. Leuchte, die mit LED,s als Lichtquellen bestückt ist, **dadurch gekennzeichnet, dass** die LED,s (2) im Abstand voneinander auf mindestens einer länglichen Leiterplatte (1) angeordnet sind, und die Leiterplatte(n) (1) mit den LED,s (2) von einer im unteren Bereich im Querschnitt tropfenartig geformten länglichen Linse (6) überdeckt wird.

2. Leuchte nach Anspruch 1, **dadurch gekennzeichnet, dass** die Linse (6) aus Kunststoff besteht.

3. Leuchte nach Anspruch 1 oder 2, **dadurch gekennzeichnet, dass** die Leiterplatte(n) (1) auf dem kurzen Schenkel (3) eines T-förmigen Tragprofiles (4) befestigt sind.

4. Leuchte nach Anspruch 3, **dadurch gekennzeichnet, dass** der kurze Schenkel (3) des T-förmigen Tragprofiles (4) in eine Nut (7) der länglichen Linse (6) eingeschoben ist.

5. Leuchte nach einem der Ansprüche 1 bis 4, **dadurch gekennzeichnet, dass** die Linse (6) wenigstens teilweise von einer mit Kühlflüssigkeit zu füllenden Kammer (9) umschlossen ist.
